# EUROPÄISCHE PATENTANMELDUNG

(11) **EP 1 413 461 A1**
(43) Veröffentlichungstag der Anmeldung: **28.04.2004**
(21) Anmeldenummer: 03021120.5
(22) Anmeldetag: 20.09.2003
(51) Int. Cl.: B60G 17/015

(54) **Stabilisierung des Be- und Entladevorgangs bei luftgefederten Nutzfahrzeugen**

(30) Priorität: 25.10.2002 DE 10249719
(71) Anmelder: DaimlerChrysler AG, 70567 Stuttgart (DE)
(72) Erfinder: Baumann, Peter, 76571 Gaggenau (DE); Markovic, Thomas, 70190 Stuttgart (DE); Schuler, Helmut, 71116 Gärtringen (DE)

(57) **Zusammenfassung**

Die Erfindung betrifft ein Verfahren zur Stabilisierung eines Nutzfahrzeugs (1) während eines Be- oder Entladevorgangs. Dabei weist das Nutzfahrzeug (1) zumindest an einer Fahrzeugachse (6) eine Luftfederung (8a;8b) sowie eine Transportvorrichtung (4) auf, die an einem Fahrzeugrahmen (5) kippbar gelagert ist. Über die Luffederung (8a;8b) ist der Rahmen (5) mit dem Fahrwerk (6) verbunden und wird bei Einleitung eines Be- oder Entladevorgang automatisch auf mindestens einen mechanischen Anschlag am Fahrwerk (6) abgesenkt.

## Beschreibung

Die Erfindung betrifft ein Verfahren zur Stabilisierung eines Nutzfahrzeugs während Be- oder Entladevorgängen gemäß den Merkmalen des Oberbegiffs des Anspruch 1.

In der DE 44 15 760 C1 wird ein Verfahren zum gesteuerten Heben und Senken eines Fahrzeughecks mittels zweier an der Hinterachse des Fahrzeugs befestigter Luftfederbälge beschrieben. Dort ermöglicht die Entlüftung der Luftfederbälge eine Verringerung des Abstandes zwischen dem Fahrzeugaufbau und der Hinterachse auf einen vorgeschriebenen Wert. Durch Belüften der beiden Luftfederbälge wird der Fahrzeugaufbau gegenüber der Hinterachse auf einen vorbestimmten Soll-Wert angehoben. Somit kann das Fahrzeugheck zum bequemeren Be- oder Entladen herabgesenkt und danach wieder in den fahrfertigen Zustand angehoben werden. Nachteilig ist jedoch, dass auch im abgesenkten Zustand eine Restkompressibilität der Luftfederbälge verbleibt.

Diese Restkompressibilität kann u.a. auch bei einem Fahrzeug mit kippbarer Transportvorrichtung, welches im weiteren als Kipper bezeichnet wird, zu einer kritischen Querneigung des Fahrzeugaufbaus führen. Wenn sich der Kipper auf einem quer zur Fahrtrichtung geneigten Untergrund befindet und die Transportvorrichtung gekippt wird, kann der Zustand eintreten, dass durch die Gewichtskraft der mit Transportgut beladenen Transportvorrichtung ein so großes Moment um die Fahrzeuglängsachse erzeugt wird, dass dieses Moment durch die Fahrzeugräder mit der gegebenen Spurweite des Fahrzeugs nicht mehr abgestützt werden kann.

Ursache für diesen kritischen Zustand ist die Schwerpunktslage der mit Transportgut beladenen Transportvorrichtung bzw. die Beschaffenheit und Neigung des Untergrundes auf dem das Fahrzeug steht.

Es sind Möglichkeiten zur Stabilisierung des Fahrzeugs während des Be- und Entladevorgangs bekannt durch z.B. am Fahrzeug angebrachte seitliche Stützen, die ausgefahren und auf festen Untergrund abgesenkt werden, um so durch Verbreiterung der Abstützbasis die Querstabilisation des Fahrzeugs zu erhöhen. Diese Stützen müssen jedoch überwiegend manuell vom Fahrzeugführer aus- und eingefahren werden, wodurch diese Variante recht zeitaufwendig ist.

Aufgabe der Erfindung ist es daher, ein Verfahren zur Stabilisierung des Be- und Entladevorgangs der Transportvorrichtung eines Nutzfahrzeugs anzugeben, bei dem Be- und Entladevorgänge ohne die erwähnten kritischen Zustände für das Fahrzeug ablaufen.

Diese Aufgabe wird erfindungsgemäß durch die Merkmale des Anspruch 1 gelöst. Weitere vorteilhafte Merkmale beinhalten die Unteransprüche.

Heutige Transportfahrzeuge besitzen in zunehmendem Maße eine Federung, über die mittels elektronischer Regelung auch ein Niveauausgleich zwischen Fahrwerk und Fahrzeugaufbau vorgenommen werden kann. Insbesondere bei diesen Fahrzeugen ist eine Adaption der vorliegenden Erfindung einfach und kostengünstig zu realisieren.

Grundlegender Gedanke der Erfindung ist es, bei Kippern bei Einleitung eines Entladevorgangs durch den Fahrzeugführer den Fahrzeugrahmen automatisch nahezu parallel auf mindestens zwei beabstandete mechanische Anschläge des Fahrwerks abzusenken. Zeitlich parallel dazu wird bereits mit dem Kippen der Transportvorrichtung über eine seine Aussenbegrenzungen mittels einer in der Regel hydraulischen Hubvorrichtung begonnen. Alternativ zum zeitgleichen Ablauf können die Vorgänge Absenken des Fahrzeugrahmens und Kippen der Transportvorrichtung auch zeitlich nacheinander erfolgen.

Durch Absenken des Fahrzeugrahmens rückt der Schwerpunkt der mit Transportgut beladenen Transportvorrichtung während des Kippens der Transportvorrichtung näher an die Aufstandsfläche des Transportfahrzeugs als ohne Absenken. Auch liegt der Schwerpunkt der mit Transportgut beladenen Transportvorrichtung nach Absenken des Fahrzeugrahmens während des Kippens näher an der Fahrzeughochachse im Vergleich zum nicht abgesenkten Zustand. Dieses wird durch Ausgleich der ungleichmäßigen Einfederung der Fahrzeugseiten aufgrund der von einander beabstandeten mechanischen Anschläge der Fahrzeugrahmen-Längsträger am Fahrwerk erreicht. Durch diese beiden Maßnahmen wird das um die Fahrzeuglängsachse wirkende Moment verringert und somit die Stabilität beim Abkippen des Transportguts erhöht.

Das Absenken des Fahrzeugrahmens auf die mechanischen Anschläge des Fahrwerks ist inbesondere dann wichtig, wenn die Transportvorrichtung aufgrund des Geländeuntergrundes auf dem das Transportfahrzeugs steht, in Querrichtung stärker von der Waagerechten geneigt ist, als ein vorgegebener erster Grenzwert von ca. 10 bis 15 Grad. Eine entsprechende Winkelmessung kann mittels eines einfachen, am Fahrzeugaufbau befestigten Sensors bei Betätigung der Kippvorrichtung durchgeführt werden. Alternativ kann der Winkel aus zwei in Querrichtung des Fahrzeugs beabstandeten Abstandsmessungen zwischen Transportvorrichtung bzw. Fahrzeugaufbau und Achse bzw. Fahrgestell ermittelt werden.

Das gesamte Verfahren läuft nach Betätigung der Steuerung zum Kippen der Transportvorrichtung durch den Fahrzeugführer automatisch ab. Somit ist gewährleistet, dass nicht aus Unachtsamkeit oder aus Zeitdruck des Fahrzeugführers das Stabilisieren des Be- oder Entladevorgangs vergessen wird.

Eine vorteilhafte Ausführung der Erfindung sieht vor, dass mittels mindestens eines Sensors ebenfalls der Beladungszustand der Transportvorrichtung erfaßt werden kann. Insbesondere wird das Signal des mindestens einen Sensors dazu benutzt, um einen Beladungsvorgang zu erkennen. Wird ein Beladungsvorgang erkannt, wird das Absenken des Fahrzeugrahmens automatisch eingeleitet. Der Sensor kann dabei an der Federung des Fahrzeugs befestigt oder in dies integriert bzw. parallel zur Federung angeordnet sein.

Eine weitere vorteilhafte Ausgestaltung der Erfindung sieht vor, den Fahrzeugrahmen nach Beendigung des Be- bzw. Entladevorgangs wieder automatisch auf den im Normalzustand herrschenden Abstand zwischen Fahrwerk und Fahrzeugrahmen anzuheben. Das Ende eines Beladevorgangs wird dabei z.B. durch das Überschreiten einer Fahrzeuggeschwindigkeitsgrenze von beispielsweise 10 km/h definiert. Das Ende eines Entladevorgangs ist z.B. bei vollständig eingefahrenem Hubelement der Kippvorrichtung gegeben.

Durch das Anheben des Fahrzeugrahmens wird das Transportfahrzeug wieder in den Zustand versetzt, bei dem ausreichende Federung des Fahrzeugaufbaus gewährleistet ist.

Falls das Fahrzeug nach Beendigung eines Beladungsvorgangs in Fahrzeugquerrichtung stärker als ein zweiter Grenzwert gegenüber der Waagerechten geneigt steht, kann das Anheben des Fahrzeugrahmens solange ausgesetzt werden, bis sich die Transportvorrichtung wieder in annähernd waagerechtem Zustand befindet. Der zweite Grenzwert liegt dabei in einem Bereich von ca. 5 bis 10 Grad. Der zweite Grenzwert wird in der Regel geringer gewählt werden als der erste Grenzwert, da beim Beladen eines schräg stehenden Fahrzeugs eine ungleichmäßige Verteilung der Transportladung leichter auftritt, als bei Beladen eines in der Waagerechten stehenden Fahrzeugs.

Die Steuerung der Kippvorrichtung sieht ein Modul vor, mit der das Absenken und Anheben des Fahrzeugrahmens im Störfall der Automatik manuell vorgenommen bzw. im Gefahrenfall, z.B. bei Quetschgefahr von Personen oder Gegenständen, manuell unterbrochen werden kann. Bei Ausfall der elektronischen Steuerung ist eine Bedienung der Hydraulik bzw. Pneumatik von Hand möglich.

Ein Ausführungsbeispiel der Erfindung wird nachfolgend anhand einer Zeichnung näher beschrieben.

Es zeigt:
- Fig. 1:: eine Rückansicht eines Nutzfahrzeugs mit Luftfederung,
- Fig. 2:: eine Ansicht gemäß Fig. 1, jedoch bei abgesenktem Fahrzeugaufbau,
- Fig. 3:: ein Nutzfahrzeug auf einem geneigten Untergrund bei gekippter Transportvorrichtung,
- Fig. 4:: eine Ansicht gemäß Fig. 3, jedoch bei abgesenktem Fahrzeugaufbau.

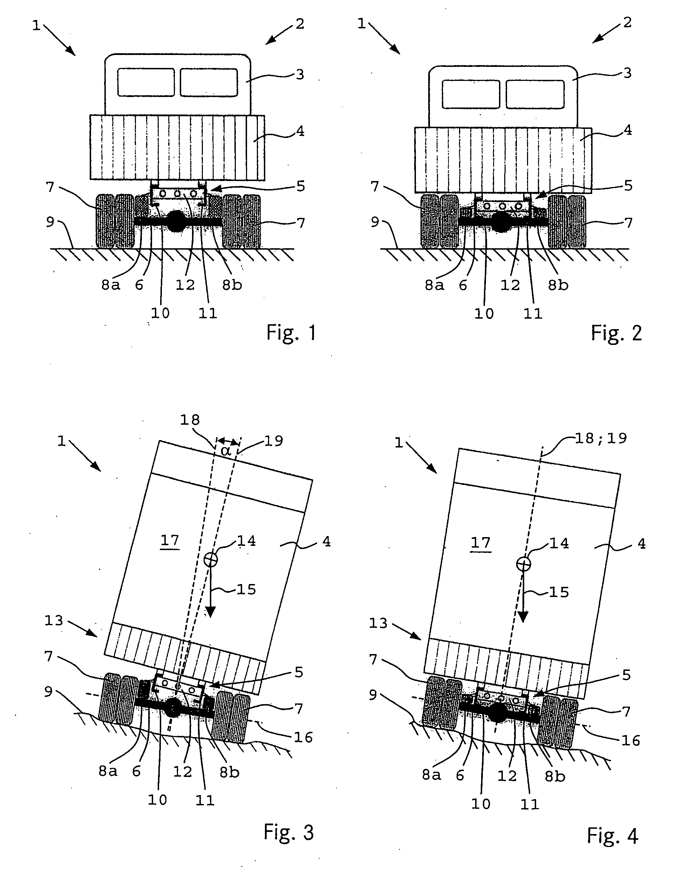

In Fig. 1 ist die Rückansicht eines Nutzfahrzeugs 1 dargestellt. Das Nutzfahrzeug 1 steht mit seinen Rädern 7 auf einem annähernd waagerechten Untergrund 9. Der Fahrzeugaufbau 2 weist ein Fahrerhaus 3 sowie eine Transportvorrichtung 4 auf, die beide an einem Rahmen 5 befestigt sind. Der Rahmen 5 besitzt zwei Profilhälften 10;11, die über Querstreben 12 miteinander verbunden sind. An den beidseitigen Enden eine Hinterachse 6, die als Starrachse ausgebildet ist, sind Zwillingsräder 7 montiert. Der Rahmen 5 ist über Luftfedern 8a;8b an der Hinterachse 6 abgestützt. Dabei sind die Luftfedern 8a;8b seitlich des Rahmens 5 angeordnet und mit diesem kraftschlüssig verbunden.

In Fig. 2 ist der Fahrzeugaufbau 2 gegenüber der Darstellung in Fig. 1 abgesenkt. Der Rahmen 5 liegt dabei über nicht dargestellte steife Gummipuffer mit den unteren Aussenflächen seiner beiden Profilhälften 10;11 auf der Oberseite der Starrachse 6 auf, die Querstrebe 12 verläuft nahezu parallel zur Drehachse 16 der Hinterachse 6. Das Volumen der beiden Luftfedern 8a;8b ist gegenüber dem Zustand in Fig. 1 bis auf einen vorgegebenen Resthaltedruck verringert, so dass eine gewisse Abstützung des Aufbaus 2 an der Hinterachse 6 durch die voneinander beabstandeten Luftfedern 8a;8b gegeben ist.

In Fig. 3 steht das Nutzfahrzeug 1 mit seinen Rädern 7 auf einem deutlich von der Waagerechten abweichend verlaufenden Untergrund 9 wie z.B. auf einer Böschung oder einem abschüssigen Hang. Die Transportvorrichtung 4 ist über eine nicht dargestellte Hubvorrichtung angehoben. Aufgrund der Hangneigung ist die Längsachse 19 der Transportvorrichtung 4 relativ zur aus Hochachse 18 und Längsachse des Nutzfahrzeugs 1 gebildeten Ebene um den Winkel α verschwenkt. Dabei ist die rechte Luftfeder 8b stärker komprimiert als die linke Luftfeder 8a, die sogar leicht entspannt sein kann gegenüber dem normalen in ihr herrschenden Druck.

Mit 14 ist ein momentaner Schwerpunkt der Transportvorrichtung 4 bezeichnet. Dieser Schwepunkt 14 ist unter anderem abhängig von der Gewichtsverteilung des geladenen Transportgutes auf der Transportvorrichtung 4. Der Abstand zwischen dem momentanen Schwerpunkt 14 und dem Untergrund 9 vergrößert sich bei Anheben der Transportvorrichtung 4 solange, bis eine Ralativbewegung zwischen dem mitgeführten Transportgut und der Transportvorrichtung 4 auftritt und das Transportgut von der Transportvorrichtung 4 über das hintere Ende 13 der Transportvorrichtung 4 abrutscht.

Beim Anheben der Transportvorrichtung können Situationen auftreten, bei denen der momentane Schwepunkt aufgrund der lotrechten Gewichtskraft, in Fig. 3 als Pfeil 15 dargestellt, ein Moment um die Längsachse des Nutzfahrzeugs 1 erzeugt, welches nicht mehr durch die hangabwärts befindlichen Reifen 7 des Nutzfahrzeugs 1 abgestützt werden kann. Das Nutzfahrzeug 1 kippt dann seitlich, hangabwärts um. Insbesondere tritt diese Situation auf, wenn das Transportgut derart auf der Transportvorrichtung 4 angeordnet ist, dass die Gewichtskraft 15 die Drehachse 16 der Hinterachse 6 außerhalb des Bereichs zwischen den Reifen 7 beider Fahrzeugseiten schneidet. Eine rauhe Oberfläche des Bodens 17 der Transportvorrichtung 4 und/oder z.B. feuchtes, festes Transportgut wie etwa feuchter Sand verstärken die Kippgefahr, da das Transportgut erst bei größeren Neigungen der Transportvorrichtung 4 von dieser abrutschen.

In der Fig. 4 steht das Nutzfahrzeug auf der selben Böschung bzw. dem selben abschüssigen Hang wie in Fig. 3, jedoch ist der Rahmen wie in Fig. 2 auf die Hinterachse 6 des Nutzfahrzeugs 1 durch Entlüftung der Luftfedern 8 abgesenkt. Der Rahmen 5 liegt über nicht dargestellte steife Gummipuffer mit den unteren Aussenflächen seiner beiden Profilhälften 10;11 auf der Oberseite der Starrachse 6 auf, die Querstrebe 12 verläuft nahezu parallel zur Drehachse 16 der Hinterachse 6. Durch den abgesenkten Rahmen 5 gelangt auch die mit dem Rahmen 5 verbundene Transportvorrichtung 4 näher an den Untergrund 9. Insbesondere liegt der momentane Schwerpunkt 14 der Transportvorrichtung 4 entgegen der in Fig. 3 dargestellten Situation nun in der durch die Fahrzeughochachse 18 und Fahrzeuglängsachse aufgespannten Ebene. Daher schneidet die Gewichtskraft 15 die Drehachse 16 der Hinterachse 6 zwischen den Rädern der beiden Fahrzeuglängsseiten. Das durch die Gewichtskraft 15 erzeugte Moment um die Längsachse des Nutzfahrzeugs 1 kann durch die hangabwärts befindlichen Räder 7 abgestützt werden. Somit reduziert das Absenken des Aufbaus 2 auf die Achse 6 die Kippneigung des Nutzfahrzeugs 1.

## Patentansprüche

1. Verfahren zur Stabilisierung eines Nutzfahrzeugs während eines Be- oder Entladevorgangs, wobei das Nutzfahrzeug
- zumindest an einer Fahrzeugachse eine Luftfederung aufweist,
- eine Transportvorrichtung aufweist, die an einem Fahrzeugrahmen kippbar gelagert ist,
- welcher über die Luffederung mit dem Fahrwerk verbunden und
- bei einem Be- oder Entladevorgang abgesenkbar ist,
**dadurch gekennzeichnet,**
**dass** bei Einleitung des Be- oder Entladevorgangs der Fahrzeugrahmen (5) auf mindestens einen mechanischen Anschlag am Fahrwerk (6) automatisch abgesenkt wird.

2. Verfahren nach Anspruch 1,
**dadurch gekennzeichnet,**
**dass** ein
- Beladevorgang über Gewichtszunahme während des Fahrzeugstillstands durch einen Sensor ermittelt wird und
- ein Entladevorgang bei Bewegen einer mit der Transportvorrichtung (4) kraftschlüssig verbundenen Hubvorrichtung aus der Ausgangsposition detektiert wird.

3. Verfahren nach Anspruch 1 oder 2,
**dadurch gekennzeichnet,**
**dass** bei Einleitung des Entladevorgangs der Fahrzeugrahmen (5) automatisch auf den mechanischen Anschlag abgesenkt wird, wenn durch einen Sensor eine Querneigung der Transportvorrichtung (4) gegenüber der Waagerechten detektiert wird, die einen vorgegebenen ersten Grenzwert überschreitet.

4. Verfahren nach einem der vorhergehenden Ansprüche,
**dadurch gekennzeichnet,**
**dass** mittels mindestens eines Sensors ein Beladevorgang erkannt wird, wobei der Sensor am Luftfedersystem (8a;8b) des Fahrzeugs (1) befestigt oder in dieses integriert bzw. parallel zu diesem angeordnet ist.

5. Verfahren nach einem der vorhergehenden Ansprüche,
**dadurch gekennzeichnet,**
**dass** nach Beendigung des Be- oder Entladevorgangs die Luftfedern (8a;8b) automatisch wieder befüllt werden und dadurch der Fahrzeugrahmen (5) vom Fahrwerk (6) ab- und auf ein vorgegebenes Niveau angehoben wird.

6. Verfahren nach einem der vorhergehenden Ansprüche,
**dadurch gekennzeichnet,**
**dass** nach Beendigung des Beladevorgangs der Fahrzeugrahmen (5) erst dann wieder auf ein vorgegebenes Niveau über dem Fahrwerk angehoben wird, wenn eine Querneigung der Transportvorrichtung (4) gegenüber der Waagerechten geringer ist, als ein vorgegebener zweiter Grenzwert.

7. Verfahren nach einem der vorhergehenden Ansprüche,
**dadurch gekennzeichnet,**
**dass** das Ende eines Beladevorgangs oder eines Entladevorgangs durch Erreichen oder Überschreiten einer jeweils vorgegebenen Fahrzeuggrenzgeschwindigkeit definiert wird.

8. Verfahren nach einem der vorhergehenden Ansprüche,
**dadurch gekennzeichnet,**
**dass** die Steuerung zum Absenken und Anheben des Fahrzeugrahmens (5) manuell vorgenommen werden kann.

9. Verfahren nach einem der vorhergehenden Ansprüche,
**dadurch gekennzeichnet,**
**dass** der Vorgang des Absenkens oder Anhebens des Fahrzeugrahmens (5) jederzeit manuell unterbrochen und umgekehrt werden kann.
